## Europäisches Patentamt
## European Patent Office
## Office européen des brevets

(19)

(11) Publication number: **0 020 091**
**A1**

(12) **EUROPEAN PATENT APPLICATION**

(21) Application number: **80301693.0**

(22) Date of filing: **22.05.80**

(51) Int. Cl.³: **E 21 B 31/113, F 16 F 15/03**

(30) Priority: **04.06.79 GB 7919473**

(43) Date of publication of application: **10.12.80**
**Bulletin 80/25**

(84) Designated Contracting States: **AT BE CH DE FR GB IT LI LU NL SE**

(71) Applicant: **INTORALA LTD., 16 Justice Mill Lane, Aberdeen. AB1 2EP Scotland (GB)**

(72) Inventor: **Ferrier, John Eric, 9 Broadhaven Road, Old Portlethen Aberdeen Scotland (GB)**

(74) Representative: **Szczuka, Jan Tymoteusz et al, Cruikshank & Fairweather 19 Royal Exchange Square, Glasgow G1 3AE Scotland (GB)**

(54) **Drilling jar.**

(57) This invention relates to a drilling jar. Known drilling jars are of only limited efficiency.

According to the present invention a drilling jar has a member (1) for receiving a mechanical impact and a second member (2) for transmitting a force in response to said impact, said second member (2) being slidable relative to said first member (1) in use of the drill jar in a longitudinal direction parallel to the direction of drilling, between an extended position and a contracted position, passage means (3) for containing electro-viscous fluid extending between said first and second members (12) and/or from a relief chamber (5) whose capacity is reduced when said members move towards said contracted position, electrical field generation means (12) disposed adjacent said passage means for producing an alternating current electrical field in electro-viscous fluid in said passage means (3) in use of the drill jar; sensing means arranged for directly or indirectly sensing at least one of impact on said first member (1) and relative movement between said members (12) from said extended position towards said contracted position; and control means arranged for activating said electric field generation means (12, 13) in response to said sensing by said sensing means so that passage of electro-viscous fluid through the passage means (3) during contraction is periodically restrained whereby an impact on said first member (1) is transmitted by said second member (2) at least partially in the form of a vibratory force.

# DRILLING JAR

This invention relates to drilling jars such as those used to apply a shock to free a drill, drill-pipe or tool that has become stuck in a bore-hole.

A limitation of existing jars is that they only apply a simple mechanical impact to free the stuck drill or other part, when in practice a combination of vibration at a suitable natural frequency and impact could free the stuck components more effectively and/or efficiently. An additional advantage that could be obtained by the use of vibration in freeing stuck components is that by reducing the total shock, the possibility of damage to the parts being retreived can be reduced.

The application of vibration by conventional methods to drilling jars would however be relatively impracticable in view of the complex mechanical and/or hydraulic arrangements necessary due to the generally harsh conditions under which jars are usually operated.

It is an object of the present invention to provide a drilling jar in which a vibrating force is applied in a simple and convenient manner.

Conventional drilling jars generally consist of a series of concentric cylinders separated by a hydraulic fluid with at least two of the cylinders moving relative to each other in operation of the jar with a passage means containing hydraulic fluid extending therebetween, optionally so that fluid is displaced from a chamber whose capacity is reduced following impact and passes through a passage means extending between said two cylinders or between two other parts which may or may not be relatively movable.

According to the present invention a drilling jar is characterized in that the jar has a first member for receiving a mechanical impact and a second member for transmitting a force in response to said impact, said second member being slidable relative to said first member in use of the drill jar in a longitudinal direction parallel to the direction of drilling, between an extended position and a contracted position, passage means for containing electro-viscous fluid extending between said first and second members and/or from a relief chamber whose capacity is reduced when said members move towards said contracted position, electrical field generation means disposed adjacent said passage means for producing an alternating current electrical field in electro-viscous fluid passing through said passage means in use of the drill jar; sensing means arranged for directly or indirectly sensing at least one of impact on said first member and relative movement between said members from said extended position towards said contracted position; and control means arranged for activating said electric field generation means in response to said sensing by said sensing means so that passage of the electro-viscous fluid through the passage means during contraction is periodically restrained whereby an impact on said first member is transmitted by said second member at least partially in the form of a vibratory force.

It will be appreciated by those skilled in the art that conventional drilling jars may be simply and readily modified into accordance with the present invention by the provision of suitable electrical field generation means at a suitable passage and providing electro-viscous fluid therein, as well as appropriate sensing and control means.

Conventional drilling jars are in practice generally made up of several parts some of which are relatively movable whilst others are not. The passage means for containing the electro-viscous fluid may be disposed between various combinations of these and can have varying dimensions, even being little or no greater than the clearance required to provide a sliding fit (further discussion of the significance of the passage dimensions follows below). Thus for example the passage means concerned could extend between the mandrel and the mandrel body, the knocker and either the middle body or the mandrel, the piston and middle body, the piston and the mandrel, or the mandrel and the middle body. Alternatively though a drilling jar of the invention could comprise a conventional drilling jar with the additional features provided according to this invention embodied in a separate unit connected at either end of said conventional drilling jar.

It will be apparent from the above that with a drill jar according to the present invention it is not necessary to provide complex mechanical or hydraulic means for generating a separate vibratory force. Instead the force of the applied impact is itself at least partially converted into a vibratory force with the consumption of as little as a few milliamps of an AC electric current which can be readily supplied from a suitable power supply which can be provided in situ e.g. in the form of a battery and suitable inverter or can be a remotely connected AC supply.

The apparatus also has the advantages that variable frequencies higher than those available by conventional mechanical or hydraulic means are achievable using well established electronic techniques, so the drilling jar may be readily "tuned" to operate at frequencies which are structurally significant in relation to the size, mass etc. of the drill and/or other associated components.

Further preferred features and advantages of the invention will appear from the following description given by way of example of some preferred embodiments of the invention illustrated with reference to the accompanying drawings in which:

Figure 1 is a partial generally schematic longitudinal section showing one side of a first annular drilling jar of the invention;

Figure 2 is a corresponding view of a second drilling jar;

Figure 3 is a corresponding view of a third drilling jar; and

Figure 4 is a corresponding view of a conventional drilling jar.

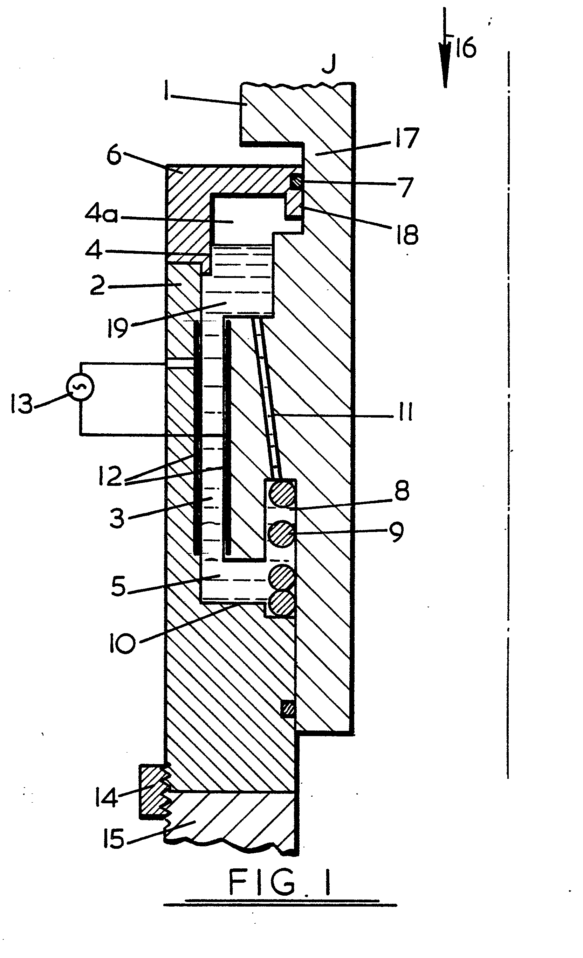

In the drawings like parts are indicated by the same reference numbers. Figure 1 shows part of a first drilling jar having a generally cylindrical first member 1 for receiving a mechanical impact (hereinafter referred to as a transfer hammer) and a generally cylindrical second member 2 for transmitting a force in response to said impact and which also serves as a housing. The transfer hammer 1 is axially slidable within the housing 2, an annular passage 3 extending longitudinally therebetween from a first, annular, chamber 4 to a relief chamber 5. The upper end of the housing 2 is provided with an annular cap 6 which is provided with a seal 7 at its inward edge between said cap and the transfer hammer 1 for sealingly closing the upper end of the annular chamber 4. Towards the lower end of the transfer hammer 1 there is provided a blind annular bore 8 which receives one end of a return compression spring 9 which extends through the relief chamber 5 into abutment with a stop surface 10 provided on the housing 2 for urging the transfer hammer 1 into engagement, with a stop means 18 provided on the cap housing 6, in an extended position of the first and second members 1, 2.

A return passage 11 extends from the blind bore 8 to the annular chamber 4 connecting the latter to the relief chamber 5.

Annular electrodes 12 are provided on the transfer

0020091

hammer 1 and housing 2 on either side of the passage 3 and are connected to an alternating current electricity supply means 13 to provide therewith electric field generation means. If desired one or other electrode could be dispensed with, the transfer hammer or housing itself serving as an electrode.

The lower end of the housing 2 is connected 14 to the upper end of a stuck drill string 15 whose drilling direction is indicated by arrow 16.

In operation of the drilling jar an impact is applied to the upper end 17 of the transfer hammer 1 in the drilling direction. The transfer hammer 1 moves axially within the housing 2 out of engagement with the housing cap stop means 18 against the biasing force of the return spring 9 until the lower end of the transfer hammer 1 engages the stop surface 10 (or until the impact force has all been converted into vibratory forces). This results in expansion of the annular chamber 4 which is partly filled with electro-viscous fluid 19, with displacement of said fluid through the annular passage 3 between the electrodes 10 there-into from the correspondingly contracting relief chamber 5. As this occurs sensing means (not shown) provided to directly or indirectly sense the impact on the transfer hammer 1 or the passage of the fluid 19 through the annular passage 3 activate control means (not shown) which in turn activate the electricity supply 13 so that an alternating electric field extending through the annular passage 3 is generated. This results in an alternating variation in the viscosity of the electro-viscous fluid 19 and a corresponding alternating variation in the electro-viscous shear stress induced in the annular passage 3. Since the fluid 19 is able to flow through the annular passage 3, no appreciable fluid pressure is generated by the movement of the transfer hammer 1. After each impact the energisation of the electricity supply 19 is discontinued to permit the transfer hammer 1 to return to the position shown in the drawing in contact with stop means 18 under the influence of the spring 9 i.e. the extended position of the members 1, 2.

In order to allow for the change in internal volume of the annular chamber 4 when the upper end 17 of the transfer hammer 1 slides into the housing 2, the fluid does not completely fill the chamber 4, there being a space 4a, preferably filled with gas, above the level of the fluid in the chamber 4. The position of the level in the extended position of the members 1, 2 is chosen so that the increase in internal volume produced in the chamber 4 during expansion is accommodated by space 4a without excessive pressure rise in space 4a.

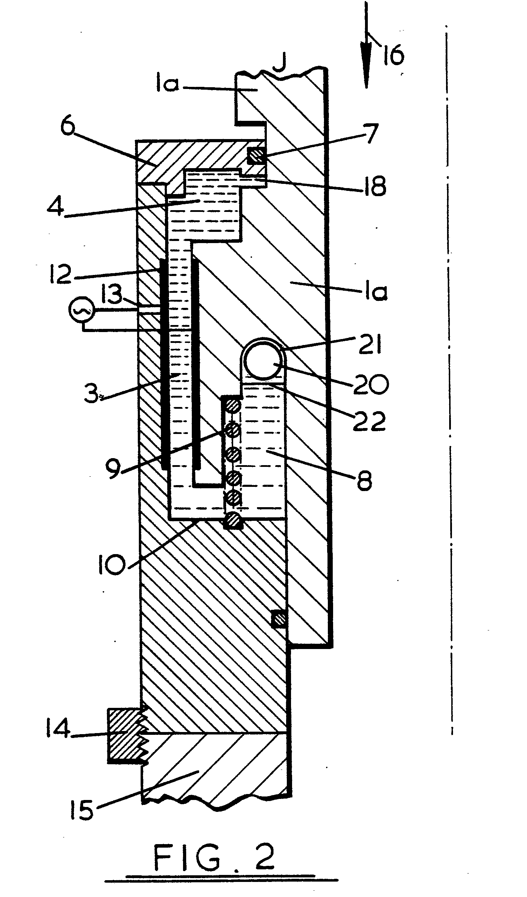

A second form of the invention, shown in Figure 2, which provides for more effective transmission of relatively high forces than the jar of Figure 1, uses a modified transfer hammer 1a which does not possess a return passage 11 as provided in the transfer hammer 1 in the jar of Figure 1. The other features of the jar of Figure 2 are, however, similar to those shown in Figure 1 and identified by the same reference numerals. Since there is no return passage through the transfer hammer 1a all the fluid must pass through the annular passage 3, which now constitutes an electro-viscous valve, when the transfer hammer 1a moves towards the stop surface 10.

When fluid passage commences, the electro-viscous shear stress created by the applied AC voltage, and acting over the area of the electrode 12 is balanced against the pressure acting over the frontal peripheral area of the electrode flow path. For example, if D is the electrode diameter, $e$ is the gap width, L is the axial length of the electrodes, $S_E$ is the electro viscous shear stress created over each shear face (i.e. each coaxial surface) and the developed pressure at the lower end of the transfer hammer is P, then $P \times De\pi = 2S_E \times \pi DL$, giving $P = 2S_E L / e$.

Whilst the value of P is dependent on the force balance conditions over the annular passage 3, the pressure P is exerted over the whole area of the transfer hammer 1a, producing a relatively large effective force gain. As in the embodiment shown in Figure 1, the desired mechanical vibration is generated by energising the electrode 12 with an AC voltage at the chosen frequency, which can be readily altered to suit changed conditions during attempts to free the stuck pipe. The value of $S_E$ is a function of the applied voltage to the electrodes 12, and hence by varying the voltage as well as its frequency, it is possible to control the developed pressure and thus also the remaining energy left for direct impact on stop 14, or to prevent such impact altogether.

With this second form the transfer hammer 1a does not necessarily hit the stop 10 before forces are applied to the stuck components. Indeed all the external hammer energy may be used up in the direct impact or a mixture of impact and transfer hammer movement without an impact on stop 10 occurring at all.

A resilient toroidal enclosure member 20 is located within a correspondingly shaped extension 21 formed at the inner end of the blind bore 8 in the transfer hammer 1a. The enclosure member is filled with gas, and is held within the bore by a perforated retainer 22. In this embodiment, the whole of the annular chamber 4 is filled with electro-viscous fluid, there being no gas-filled space left above the fluid level therein. This is made possible by virtue of the fact that the decrease in the total internal volume of the chambers 4, 8 and the annular passage 3 during movement of the members 1, 2 into their contracted position is compensated by the partial collapsing of the enclosure member 20 as a result of the increased fluid pressure obtaining.

When the members 1, 2 are freely permitted to return to their extended position after each hammer blow, by de-energising of the electrode 10, the partially collapsed enclosure member 20 assists the spring 8 in providing the return force required to move the transfer hammer 1a due to the difference between the resultant gradual decrease in the pressure of the fluid in the relief chamber 8 and the gaseous pressure inside the enclosure member 20. It is even possible to replace the spring 9 entirely by providing an enclosure member 20 containing gas at an appropriate elevated pressure when the members 1, 2 are in their extended position so that the enclosure member is capable of providing by itself a return force of the required magnitude after each blow.

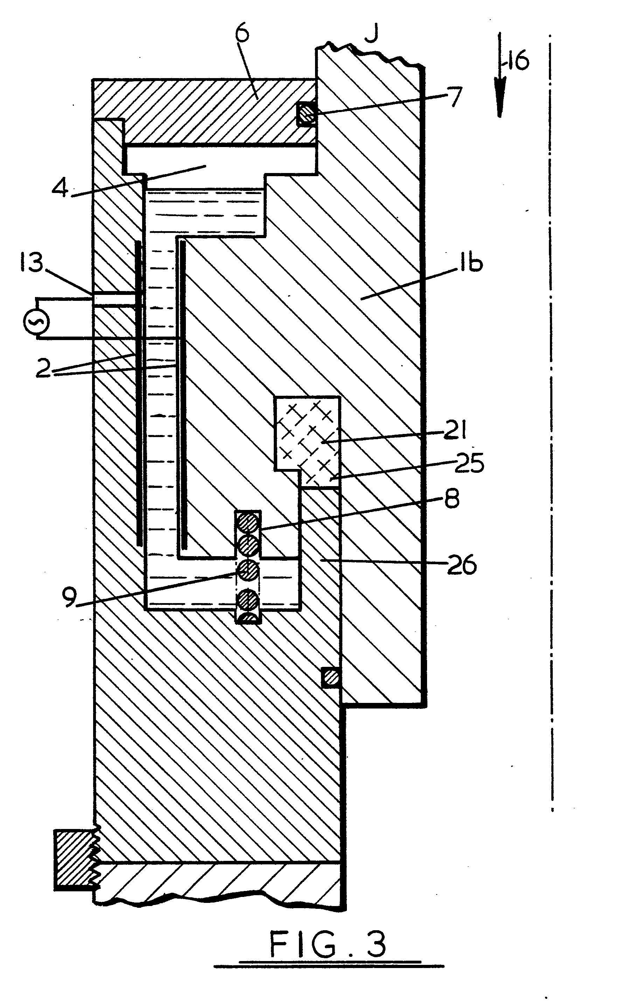

Figure 3 shows a third drilling jar of the invention, which, like that shown in Figure 1, includes a gas-filled space above the fluid level in the annular chamber 4 to allow for the changes in total internal volume of the chamber and passage(s) described above, and in which the annular passage 3 constitutes an electro-viscous valve as in the embodiment of Figure 2. In other respects the drilling jar of Figure 3 is again generally similar to that of Figure 1.

Referring to Figure 3, a modified transfer hammer 1b includes an inner chamber in proximity to the closed end of the blind bore 8 which inner chamber is preferably filled with liquid. A conduit 25 extends from the lower end of the transfer hammer 1b inwardly of the blind bore 8 and generally parallel thereto to the inner chamber 21. A generally cylindrical projection 26 extends upwardly from the stop surface 10 or the lower end of the housing 2 into the conduit 25, being slidably received therein and separating the liquid in the inner chamber 24 for the electro-viscous fluid.

In operation of the drilling jar the projection 26 passes further into the conduit 27 and possibly into the inner chamber 24 compressing the liquid therein. Thus the projection 26 and the liquid-filled inner chamber 24 together form a liquid spring which can exert a return force on the transfer hammer 1b when the members 1b, 2 are in their contracted position after an impact, since as the transfer hammer 1b is moved downwards, the projection 24 compresses the liquid in the inner chamber 24 depending upon the bulk modulus of said liquid in accordance with the following relationship:-

$\delta p = \beta \delta v / V$ where $\delta p$ is the pressure developed in the inner chamber 24, V is the volume of the inner chamber 24, and $\delta v$ is the cross-sectional area of the projection 24 multiplied by the distance through which the transfer hammer moves towards and into the inner chamber 24. As a result there are therefore four forces acting on the transfer hammer 1b at this time, namely the force due to an impact in the drilling direction as indicated by the arrow 16, electro viscous pressure force acting upwardly over the whole area of the lower end face of the transfer hammer 1b in contact with the electro-viscous fluid 19, the force produced by compression of the spring 9 and the liquid pressure force developed by the pressure differential $\delta p$ applied over an area corresponding to the area of the free end of the projection 26. When a voltage is applied the predominant force becomes the electro-viscous pressure force. Both the coiled spring 9 and the liquid spring are intended to return the transfer members 1b, 2 to their extended position when transmission of an impact has been completed, application of the AC voltage being discontinued during the return phase.

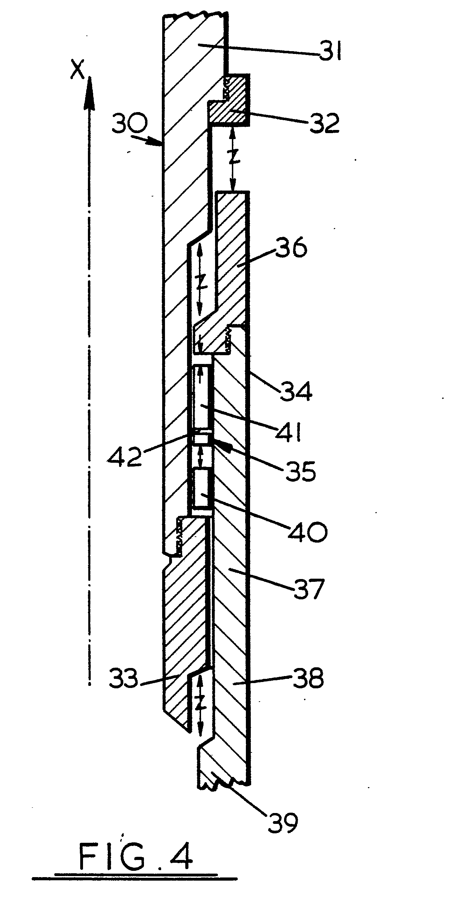

Figure 4 shows a conventional drilling jar which comprises a first upper assembly 30 made up of a mandrel 31, a mandrel ring 32 and a wash pipe 33; a second lower assembly 34 telescopically engaged around the lower end of the upper assembly 30; and a third assembly 35 disposed between the upper and lower assemblies 30, 34.

The second lower assembly 34 is made up of a mandrel body 36, a middle body 37 and a wash pipe body 38 the lower end 39 of which is screw-threadedly connected to the drill string (not shown). The lower assembly 34 is connected to the upper assembly 30 by splined bearing connection means (not shown) for permitting relative axial movement between said assemblies.

The third assembly 35 is a fluid-pressure assembly which typically comprises a piston 40 and a knocker 41 retained by a tripping device 42. In use of the jar a gradual upward pull is applied to the upper assembly 30 in the arrow direction x thus raising the pressure in the fluid in front of the piston 40 until the tripping device 42 is actuated allowing the knocker 41 to strike the lower assembly 34, jarring it and the drill string attached to it.

Such a drilling jar can readily be modified into conformity with the present invention in any of a number of ways as has already been outlined above, so that the impact applied to the lower assembly 34 is partially or wholly converted into vibratory forces.

As has been mentioned above the frequency of the alternating current employed may be readily tuned to a natural frequency of the drill string and drilling jar. In general this would usually be of the order of from 50 to 500 Hz (cycles per second).

It will be appreciated that various modifications can be made to the above described embodiments without departing from the scope of the invention as defined in the following claims. Thus, for example, the drilling jar need not be hollow with a central passage running therethrough in which case the chambers and passages may conveniently be other than annular.

0020091

## CLAIMS

1. A drilling jar characterized in that the jar has a first member (1) for receiving a mechanical impact and a second member (2) for transmitting a force in response to said impact, said second member (2) being slidable relative to said first member (1) in use of the drill jar in a longitudinal direction parallel to the direction of drilling (16), between an extended position and a contracted position, passage means (3) for containing electro-viscous fluid extending between said first and second members (1, 2) and/ or from a relief chamber (5) whose capacity is reduced when said members move towards said contracted position, electrical field generation means (12, 13) disposed adjacent said passage means (3) for producing an alternating current electrical field in electro-viscous fluid (19) in said passage means (3) in use of the drill jar; sensing means arranged for directly or indirectly sensing at least one of impact on said first member (1) and relative movement between said first and second members (1, 2) from said extended position towards said contracted position; and control means arranged for activating said electric field generation means in response to said sensing by said sensing means so that passage of electro-viscous fluid (19) through the passage means (3) during contraction is periodically restrained whereby an impact on said first member is transmitted by said second member (2) at least partially in the form of a vibratory force.

2. A drilling jar according to claim 1 characterized in that there is provided a first chamber (4) for containing electro-viscous fluid (19), the relief chamber is disposed between said members (1, 2) so that the volume of said relief chamber (5) is reduced during contraction as said members (1, 2) are moved from said extended position towards said contracted position; and the passage (3) means is a relief passage extending from said relief chamber (5) to said first chamber (4) for the passage and receipt, respectively, of fluid (19) from said relief chamber (5) when the volume of the latter is reduced.

3. A drilling jar as claimed in claim 2, wherein the first and second members (1, 2) are in the form of concentric tubular members having their adjacent surfaces formed and arranged so as to define therebetween an annular relief chamber (5) whose depth is reduced by the contraction, and an annular relief passage (3) connecting the relief chamber (5) to an annular first chamber (4) with field generation means (12, 13) including opposed electrodes (12) in the first and second members (1, 2) on either side of the relief passage (3).

4. A drilling jar according to any one of claims 1 to 3, wherein the electric field generation means (12, 13) includes means for generating an alternating current voltage.

5. A drilling jar according to any one of claims 1 to 4, wherein a return spring (9) is provided for facilitating return of the first and second members (1, 2) to the extended position.

6. A drilling jar according to claim 2 or any one of claims 3 to 5, when dependent on claim 2, wherein a fluid pressure accumulator (20) is provided in the relief chamber (5) for facilitating return of the first and second members (1, 2) to the extended position.

7. A drilling jar according to claim 2 or any one of claims 3 to 6, when dependent on claim 2, wherein is provided a bypass return passage (11) between the relief chamber (5) and the first chamber (4), controlled by a valve so as to prevent passage of fluid (19) during contraction whilst permitting return of electro-viscous fluid (19) to the relief chamber (5) during return of the first and second members (1, 2) to the extended position.

8. A drilling jar as claimed in any one of claims 1 to 7, wherein are provided co-operating flanges on the first and second members for limiting relative movement of said members in the direction of the extended position so that in use of drill jar in a drill string when lowering or raising the latter in a bore-hole the lower one of the first and second members (1, 2) is carried by the upper one of said first and second members (1, 2).

9. A drilling jar as claimed in any one of claims 1 to 8, wherein a splined connection is provided between the first and second members for transmitting rotary motion therebetween.

10. A drilling jar as claimed in any one of claims 1 to 9, wherein the alternating current has a frequency of from 50 to 500 cycles per second.

0020091

FIG. 1

FIG. 2

FIG.3

FIG.4

European Patent
Office

**EUROPEAN SEARCH REPORT**

0020091

Application number

EP 80 30 1693

## DOCUMENTS CONSIDERED TO BE RELEVANT

| Category | Citation of document with indication, where appropriate, of relevant passages | Relevant to claim |
|---|---|---|
| | US - A - 2 894 724 (ANDREW)<br>* Column 4, line 55 - column 5, line 3 *<br>-- | 1 |
| | US - A - 3 570 611 (TRUSTUL DE FORAJ PITESTI)<br>* Column 3, lines 12-21 *<br>-- | 1 |
| | GB - A - 1 282 568 (GERRISH)<br>* Claim 1; page 3, lines 37-39 *<br>-- | 1,2,4 |
| | US - A - 3 006 656 (SCHAUB)<br>* Column 3, line 74 - column 4, line 6; column 4, lines 27-28 *<br>-- | 1-4 |
| | FR - A - 1 117 141 (DAVIS)<br>* Summary paragraphs 1,7; page 5 *<br>-- | 1,2,4 |
| | US - A - 3 851 717 (BERRYMAN)<br>* Column 6, lines 16-50; column 4, lines 38-45 *<br>-- | 1,5, 8,9 |
| E | EP - A - 0 014 042 (FERRIER)<br>* Page 4, line 31 - page 6, line 31 *<br>---- | 1-10 |

**CLASSIFICATION OF THE APPLICATION (Int. Cl. 3)**

E 21 B 31/113
F 16 F 15/03

**TECHNICAL FIELDS SEARCHED (Int.Cl. 3)**

E 21 B
F 16 F 15/03
B 60 G 17/10

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 11-09-1980 | SOGNO |

EPO Form 1503.1 06.78